# EUROPEAN PATENT APPLICATION

(11) **EP 1 850 614 A1**
(43) Date of publication of application: **31.10.2007**
(21) Application number: 06008890.3
(22) Date of filing: 28.04.2006
(51) Int. Cl.: H04Q 7/38

(54) **Advanced speech call items in networks comprising a MSC server and a media gateway**

(71) Applicant: NOKIA SIEMENS NETWORKS GMBH & CO. KG, 81541 München (DE)
(72) Inventor: Premec, Domagoj, 10010 Zagreb (HR)

(57) **Abstract**

VGCS (Voice Group Call Service) and VBS (Voice Broadcast Service) are currently only specified when signalling and transport are in the same integrated entity. Therefore, to this date VGCS and VBS are not available in split architectures where the MSC (Mobile Switching Center) is implemented in two different entities, the MSC Server and a MGW (media gateway).
In order to support ASCI services in a split architecture, a server calculates from information received from a GCR (Group call register) how many conference ports are needed for this call. The server sends the information to the MGW in a new package defined in 3GPP TS 29.232.

## Description

### Background

VGCS - Voice Group Call Service Allows speech conversation of a predefined group of service subscribers in half duplex mode on the radio link. VGCS and VBS are currently only specified when signalling and transport are in the same (integrated) entity.

The invention solves the problem when signalling and transport are separated.

VGCS and V3S are a kind of Multi-party call with predefined participants (dispatchers) and to an unknown number of participants in a predefined area. Within the predefined area only one service subscriber is allowed to talk.

To save resources, the Network may decide to assign the uplink channel associated to the channel where the speech to the group is broadcasted. In a split network it is not possible to inform the MGW Media Gateway which holds the conference unit to reserve a number of ports for a call and in addition if the speech which is received on the uplink is not sent back on the downlink.

### Summary Of The Invention

The invention provides for two instances:
A) reserve max number of needed conference ports in MGW
B) in case of one channel model (Talker uses the uplink of the common downlink (Group call channel)) the termination which holds the uplink and downlink is configured such that the speech is also sent on downlink of the associated downlink channel.

To this date the VGCS and VBS are not available in a split architecture

### Brief Description Of The Drawings

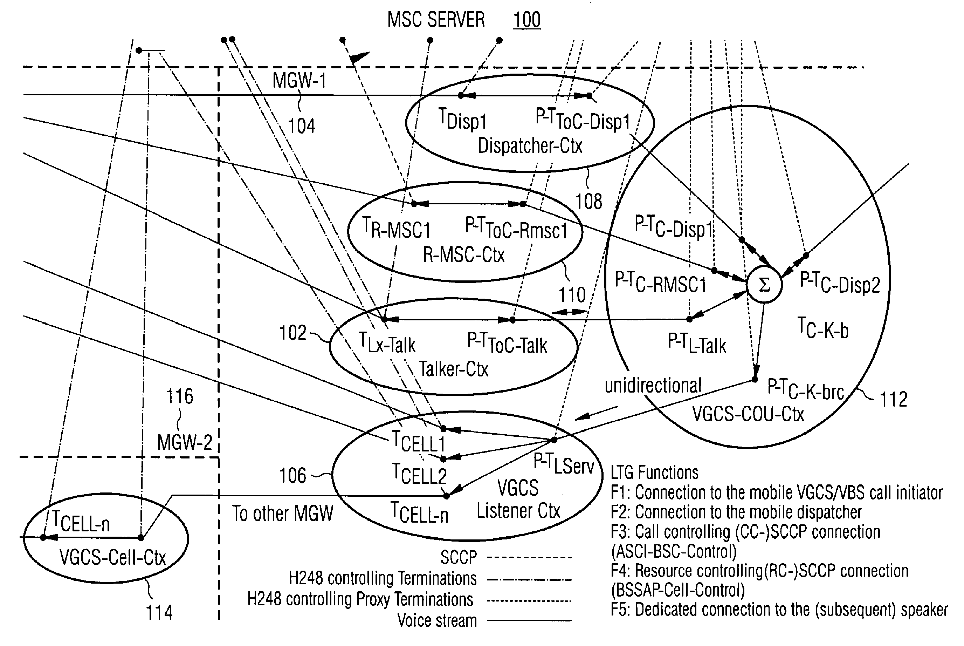

Fig. 1 is illustrates the system of the invention.

### Detailed Description

The invention performs the following steps:
A) When a VGCS or VBS call is initiated the server calculates from the received information from GCR (Group call register) how many conference ports are needed for this call.
   The server sends the information to the MGW e.g. within a new package defined in 29.232.
B) For one channel model is used when the MSC Server decides that the talker shall use the uplink associated to the ASCI broadcast channel (common downlink group call channel). The talkers speech is transferred via the uplink channel of the ASCI broadcast channel of the cell (1 channel model) .

The stream arrives within the MGW on the termination of the traffic channel serving the cell or BSS (enhanced A-interface) and is transferred to the conference function where the summarized conference signal is calculated.

The resulting stream is then transferred to all conference ports. Normally now (conference port specific) the incoming stream (own information from conference member) is subtracted. This functionality is not allowed in 1Channel model and has to be suppressed, otherwise nobody hears the talker in the cell or BSS (enhanced A-Interface) where the talker is located. To avoid that the talker hears himself, the UE internally switches off the loudspeaker.

With the present invention, VGCS and VBS can be supported in a split architecture which means a Network with MSC-Server and MGW.

### For case A) VGCS and VBS:

When the MSC server receives a setup request for a group it interrogates the GCR and receives the number of needed conference ports and reserves the requested number of ports for that call. A new parameter which contains the number of need ports shall be included when allocating the first termination of an ASCI-conference context. It is optional when adding further terminations. When the MSC server adds the first termination.

### For case B) (VGCS only):

For a 1 Channel model, the talker has no own dedicated channel. The talkers speech is transferred via the uplink channel of the ASCI broadcast channel of the cell. The stream arrives within the MGW on the termination of the traffic channel serving the cell or BSC (enhanced A-interface) and is transferred to the conference function where the summarized conference signal is calculated.

The resulting stream is than transferred to all conference ports. Normally now (conference port specific) the incoming stream (own information from conference member) is subtracted. This functionality is not allowed in 1 Channel model and has to be suppressed, otherwise nobody hears the talker. To avoid, that the talker hear himself, the handy internally switch of the loudspeaker. But all listeners could hear the talker.

For the conference termination, serving the talker context, following tasks depending on the initiator have to be done:
- Initiator is a mobile subscriber
   the conference termination, serving the talker, is working as normal conference termination. After release of the dedicated traffic channel, serving the talker, the conference termination has to change the mode to 1 Channel model method (do not suppress talker stream).

This has to be done via MOD.REQ containing the ASCI group call package, where the parameter for the stream mode is set to 1 Channel model handling.

Figure 1 shows one possibility on how a configuration could look like. Figure 1 shows an MSC server environment wherein the talker 102 is in a separated context according to the present invention. The talker exists in a first media gateway MGW1 104 along with the listener 106, a dispatcher 108, an R-MSC 110 and a NGCS COU-Ctx 112. The VGCS cell 114 exists in the second media gateway MGW2 114.

This proposal shows the realisation within a couple of Contexts for the group call but it is also possible to have a realisation within an other kind of Context configuration.

## Claims

1. A method to support ASCI services in a split architecture, comprising the steps of:
initiating a VGCS or VBS call,
in response thereto, a server calculates from the received information from GCR (Group call register) how many conference ports are needed for this call,
**characterized in that**:
the server sends the information to the MGW in a new package defined in 29.232.

2. The method of claim 1, wherein when one channel model is used when the MSC Server decides that the talker shall use the uplink associated to the ASCI broadcast channel.

3. The method of claim 2, wherein the resulting stream is then transferred to all conference ports.
